(19) Europäisches Patentamt
European Patent Office
Office européen des brevets

(11) Veröffentlichungsnummer : **0 385 108 B1**

# (12) EUROPÄISCHE PATENTSCHRIFT

(45) Veröffentlichungstag der Patentschrift : **23.12.92 Patentblatt 92/52**

(51) Int. Cl.[5] : **C04B 41/49,** C09D 4/00, A01N 55/00, C09D 183/04

(21) Anmeldenummer : **90101543.8**

(22) Anmeldetag : **26.01.90**

## (54) Organosiliciumverbindungen-enthaltende Gemische und deren Verwendung zur hydrophobierenden und antimikrobiellen Imprägnierung.

(30) Priorität : **25.02.89 DE 3905919**

(43) Veröffentlichungstag der Anmeldung : **05.09.90 Patentblatt 90/36**

(45) Bekanntmachung des Hinweises auf die Patenterteilung : **23.12.92 Patentblatt 92/52**

(84) Benannte Vertragsstaaten : **AT BE CH DE DK ES FR GB GR IT LI LU NL SE**

(56) Entgegenhaltungen :
**EP-A- 0 108 853**
**EP-A- 0 233 954**
**GB-A- 2 160 792**
**US-A- 4 406 892**
**PATENT OFFICE OF JAPAN, file supplier JAPS. &&JP-A-1299893(Bridgestone Corporation)04.12.1989**

(56) Entgegenhaltungen :
**CHEMICAL ABSTRACTS, vol. 105, no. 2, 1985 Columbus, Ohio, USA E. M. Morozova: "A new technology for producing stabilizedfoams having antimicrobial activity" Seite 7523; ref. no. 7525V**
**WORLD PATENT INDEX LATEST, Week 8409, Derwent Publications Ltd, LONDON GB. & SU-A-535808(V. F. Mironov)30.06.1983**
**CHEMICAL ABSTRACTS, vol. 86, 1977 Columbus, Ohio, USA M. G. Voronkov et al: "Trialkyl(triorganylsilylalcoxy)stannanes andtrialcyl(triorganylsilylalkylthio)stannanes and their bactericidal and fungicidal activity." Seite 630; ref. no. 190126S**

(73) Patentinhaber : **DEGUSSA AG**
**Weissfrauenstrasse 9**
**W-6000 Frankfurt (Main) (DE)**

(72) Erfinder : **Deschler, Ulrich, Dr.**
**De Zwaan 17**
**B-2130 Brasschaat (BE)**
Erfinder : **Lechner, Ulrike, Dr.**
**Landgrafenring 33**
**W-6050 Offenbach (DE)**
Erfinder : **Witzel, Michael, Dr.**
**Dannekerstrasse 5**
**W-6000 Frankfurt am Main 70 (DE)**

EP 0 385 108 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Organosiliciumverbindungen-enthaltende Gemische und deren Verwendung zur hydrophobierenden und antimikrobiellen Imprägnierung

Die Erfindung betrifft Organosiliciumverbindungen-enthaltende Gemische und deren Verwendung zur hydrophobierenden und antimikrobiellen Imprägnierung.

Der Einsatz von Alkyltrialkoxysilanen zur Hydrophobierung von Mauerwerk ist seit langem bekannt (DE-PS 20 29 446, EP-A-0101 816).

Zur antimikrobiellen Behandlung von Baumaterialien, aber auch von Textilien oder Leder wird in der EP-A-152 852 die Verwendung von Gemischen vorgeschlagen, die z. B. 2-Methyl-1,4-naphthochinon, Ethanol und Propyltrimethoxysilan enthalten.

Aus der DE-OS 3 031 598 ist bekannt, Metallaminsiliconate, die antimikrobielle Eigenschaften zeigen, in getrockneter, amorpher Form in Imprägnier- oder Beschichtungsmaterialien, wie z. B. Alkylharze einzuarbeiten.

In der JP-OS 59/80 602 (C.A. 101 (15):124890 p, 1984) wird eine Mischung aus Triethoxymethylsilan und Thiabendazol in Toluol beschrieben, die den Schimmelbewuchs auf Mauerwerkoberflächen begrenzen soll.

Weiterhin sind gemäß GB-A-2 160 792 gemische aus H-Siloxan, eine quartenäre Ammoniumgrüppe aufweisendem Trialkoxysilan und Lösungsmittel bekannt.

Ferner ist es gemäß EP-A-233 954 bekannt, gemische aus Lösungsmittel, eine quartenäre Ammoniumgrüppe aufweisendem Trialkoxysilan und einem Siloxan, des sowohl Alkoxy- als auch Polyalkylenoxid-grüppen aufweist, zum Imprägnieren von Textilfasen udgl. zu verwenden.

Aufgabe der Erfindung ist ein Mittel, bereitzustellen, das zur gleichzeitigen hydrophobierenden und antimikrobiellen Imprägnierung von anorganisch oxidischem Material geeignet ist.

Gegenstand der Erfindung sind Organosiliciumverbindungen-enthaltende Gemische dadurch gekennzeichnet, daß sie

a) mindestens ein Alkyltrialkoxysilan der allgemeinen Formel

$$(RO)_3Si\text{-}R^1 \qquad (I)$$

in der bedeuten:

R: $C_1$-$C_4$-Alkyl, insbesondere $C_1$,$C_2$-Alkyl

$R^1$: $C_1$-$C_{18}$-Alkyl, insbesondere $C_3$-$C_{18}$-Alkyl

b) ein kationisches Trialkoxysilan der allgemeinen Formel

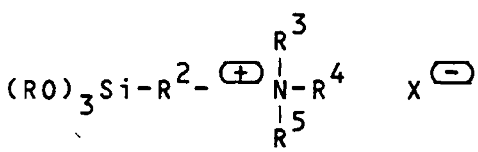

(II),

in der bedeuten:

$R^2$: $C_1$-$C_3$-Alkylen,

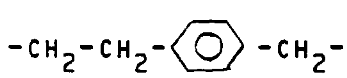

$R^3$, $R^4$, $R^5$: $C_1$-$C_{18}$-Alkyl, gleich oder verschieden

$X^{(-)}$: $Cl^-$, $Br^-$, $NO_3^-$, $J^-$, $CH_3COO^-$,

und/oder eine Organosiliciumverbindung der allgemeinen Formel

$$(RO)_3Si\text{-}R^2\text{-}S\text{-}SnR_3^6 \qquad (III),$$

in der bedeuten:

$R^6$: $C_1$-$C_6$-Alkyl, insbesondere n-Butyl

Aryl, insbesondere Phenyl

enthalten, gelöst oder gegebenenfalls emulgiert in

c) einem protischen oder aprotischen Lösungsmittel oder Lösungsmittelgemisch.

Als Lösungsmittel sind geeignet Alkohole, insbesondere Alkanole mit 1 bis 3 Kohlenstoffatomen, aber auch

Alkane mit 5 bis 30 Kohlenstoffatomen bzw. deren Gemische, wie sie z.B als Shellsol(R) auf dem Markt erhältlich sind.

Aromatische Kohlenwasserstoffe sind zwar auch geeignet, werden aber wegen ihrer mangelnden Umweltverträglichkeit nicht so bevorzugt.

Wasser wird ebenso verwendet, insbesondere in Mischungen mit Alkohol(en), wobei man das Mischungsverhältnis je nach Art der zu lösenden Verbindungen bevorzugt so einstellt, daß eine Lösung entsteht.

Besonders vorteilhaft setzt man in diesen Fällen kationische Organosiliciumverbindungen, wie man sie in Form wässriger Lösungen gemäß EP-B-0054 748 gewinnt, ein.

Die zinnhaltigen Verbindungen sind bekannt aus der Izv. Sib. Otd. Akad. Nauk. SSR. Ser. Khim. Nauk. 1977 (1) 128-134 (C.A. 86 (25): 190126 s (1977)).

Die Gemische enthalten gegebenenfalls auch Ankondensationsprodukte der unter a) und b) genannten Verbindungen.

Die durch Abspaltung von Teilmengen des Alkohols entstehenden Oligomeren sind dem Fachmann geläufig ebenso wie der Mechanismus der Oligomerenbildung. Ihr Vorhandensein beeinträchtigt die Wirkung der Gemische nicht.

Die erfindungsgemäßen Gemische enthalten bevorzügt 5 bis 97 Gew.-%, insbesondere 10 bis 40 Gew.-% an Alkyltrialkoxysilan(en) und deren gegebenfalls vorhandenen Ankondensationsprodukten, 2 bis 20 Gew.-% insbesondere 5 - 15 Gew.-% an Verbindungen gemäß (II) und/oder (III) und deren gegebenenfalls vorhandenen Ankondensationsprodukten und 1 bis 93 Gew.-%, insbesondere 55 bis 85 Gew.-% Lösungsmittel.

Neben diesen Verbindungen enthalten die Gemische vorteilhaft 0,1 bis 5,0 Gew.-%, insbesondere 0,1 bis 1,0 Gew.-% eines an sich bekannten Kondensationskatalysators wie z. B. Dibutylzinndilaurat oder Tetrabutyltitanat.

Als kationische Trialkoxysilane setzt man bevorzugt Verbindungen der allgemeinen Formeln

$$(C_2H_5O)_3Si-(CH_2)_3-\overset{\oplus}{N}(CH_3)_2C_nH_{2n+1}\ \overset{\ominus}{Cl} \qquad (IV)$$

und

$$(C_2H_5O)_3Si-(CH_2)_3-\overset{\oplus}{N}(CH_3)(C_nH_{2n+1})_2\overset{\ominus}{Cl} \qquad (V)$$

mit n = 8 bis 18 ein.

Verbindungen dieser Art besitzen antimikrobielle Wirksamkeit.

3-(Trimethoxysilyl)propyldimethyloctadecylammoniumchlorid wird z. B. wegen dieser Eigenschaft in Polyurethanschäumen eingesetzt (J. Cell. Plast. 21(5) 332-7 (C.A. 105 (2): 7525v, 1985)).

Ein weiterer Gegenstand der Anmeldung ist die Verwendung der erfindungsgemäßen Gemische zur hydrophobierenden und antimikrobiellen Imprägnierung von anorganisch-oxidischem Material.

Dazu zählen insbesondere Stein, Mauerwerk, Beton und Fassadenaußenputz.

Das Aufbringen der Gemische auf die Oberflächen erfolgt in allgemein bekannter Weise z. B. durch Eintauchen, Pinseln, Streichen, Sprühen oder flutendes Behandeln mit dem Gemisch. Im allgemeinen wird soviel aufgetragen, wie das Material aufsaugt. Dies erkennt man im allgemeinen daran, daß das aufzubringende Silan nicht länger als etwa eine Minute auf der Oberfläche sichtbar bleibt, d.h. diese während dieser Zeit satt feucht erscheint.

Die zu behandelnde Oberfläche kann dabei sowohl trocken als auch wasserfeucht sein. Es soll sich jedoch nicht auf ihr"stehendes" Wasser befinden. Wichtig ist nur, daß die Oberfläche das Gemisch aufsaugen kann; sie darf deshalb z. B. durch Staub, Salz, Salzlösungen oder Öl nicht so verschmutzt sein, daß die Saugwirkung beträchtlich verringert wird. Solchermassen verschmutzte Oberflächen müssen vor der Applikation auf an sich bekannte Weise gereinigt werden.

Erstmals wird so eine hydrophobierende und gleichzeitig antimikrobiell wirkende Ausrüstung von anorganisch oxidischem Material erreicht, die nicht nur eine oberflächliche Beschichtung darstellt, sondern auch Tiefenwirkung zeigt.

Überraschenderweise wirkt sich der Zusatz der kationischen Organosiliciumverbindungen trotz eines mengenmäßig geringen Anteils in der Hinsicht aus, daß die Eindringtiefe des Hydrophobierungsmittels erhöht und gleichzeitig die Wasseraufnahme der so behandelten Materialien verringert wird.

Dies gilt erstaunlicherweise auch für kationische Verbindungen, die einen Substituenten $R^4$ mit der Bedeutung $-C_{18}H_{37}$ tragen, von denen man hinsichtlich der Eindringtiefe das Gegenteil erwartet hätt.

Gleichzeitig ist festzustellen, daß die kationischen Verbindungen gemäß der allgemeinen Formel (II) als

Lösungsvermittler die Löslichkeit von Alkyltrialkoxysilanen in der Wasser/Alkohol-Mischung erhöhen.

Zur Demonstration der Wirkung der erfindungsgemäßen Gemische werden eine Reihe von Versuchen angeführt.

Versuchsdurchführung:

Die Steinprobekörper (5 x 5 x 5 cm ; Material: Kalksandsein) werden zunächst für einige Wochen bei Normklima (23 °C, 50 % rel. Feuchte) konditioniert und anschließend gewogen. 200 ml des Silan-Gemisches werden in einem 400 ml Becherglas vorgelegt, je drei Probekörper zweimal im Abstand von einer halben Stunde für 2 min. vollständig eingetaucht. Nach erfolgter Silanisierung lagert man die Steinklötzchen 14 Tage bei Raumtemperatur. Zur Ermittlung der Wasseraufnahme gibt man je zwei Proben in ein Wasserbad mit 5 cm überstehender Wassersäule und kontrolliert das Gewicht nach 10 min, 30 min, 60 min, 2 h, 4 h, 8h und 24 h (T:20 °C). Zum Messen der Eindringtiefe werden die Probewürfel mit Hammer und Meißel geteilt und mit Wasser, das mit Tinte gefärbt ist, besprüht.

Es werden folgende Verbindungen verwendet:

Si 103: Propyltrimethoxysilan
Si 108: n-Octyltrimethoxysilan
Si 118: n-Octadecyltrimethoxysilan
Si 275 3-(Triethoxysilyl) propyldimethyloctadecylammoniumchlorid

Als Lösungsmittel wird Isopropanol, als Katalysator n-Butyltitanat, verwendet. Die Konzentrationsangaben entsprechen Gew.-%, bezogen auf die Gesamtmenge des Gemischs, ebenso wie in den übrigen Teilen der Anmeldung.

| Silan-Gemisch | Gewichtszunahme in % (24 h Wasserbad) | Eindringtiefe Silan (mm) |
|---|---|---|
| Blindprobe (unbehandelt) | 10,27 | - |
| Si 103 : 10 % | 6,11 | 1,5 - 2,5 |
| Si 103 : 10 %; Si 275 : 5 % | 1,01 | 2 - 4 |
| Si 103 : 10 %, Si 275 : 5 % Kat: 0,5 % | 0,92 | 2 - 4 |
| Si 108 : 10 % | | 3 - 4 |
| Si 108 : 10 %; Si 275 : 5 % | 0,79 | 4 - 5 |
| Si 108 : 10 %; Si 275 : 5 % Kat: 0,5 | 0,91 | 3 - 6 |
| Si 118 : 10 % | 3,68 | 1 - 2 |
| Si 118 : 10 %; Si 275 : 5 % | 0,85 | 1,5 - 2,5 |
| Si 118 : 10 %; Si 275 : 5 % Kat: 0,5 % | 0,77 | 1 - 2 |

## Patentansprüche

1. Organosiliciumverbindungen-enthaltende Gemische, dadurch gekennzeichnet, daß sie

   a) mindestens ein Alkyltrialkoxysilan, der allgemeinen Formel

   $(RO)_3Si\text{-}R^1$ (I),

   in der bedeuten:

   R: $C_1$-$C_4$-Alkyl, insbesondere $C_1$, $C_2$-Alkyl

   $R^1$: $C_1$-$C_{18}$-Alkyl, insbesondere $C_3$-$C_{18}$-Alkyl

   b) ein kationisches Trialkoxysilan der allgemeinen Formel

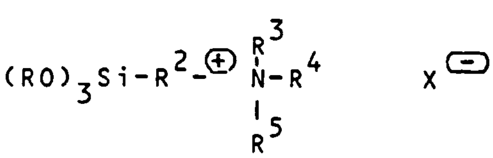

(II),

   in der bedeuten:

   $R^2$: $C_1$-$C_3$-Alkylen,

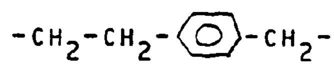

$R^3$, $R^4$, $R^5$: $C_1$-$C_{18}$-Alkyl, gleich oder verschieden
$X^{(-)}$: $Cl^-$, $Br^-$, $NO_3^-$, $J^-$, $CH_3COO^-$,
und/oder eine Organosiliciumverbindung der allgemeinen Formel

$$(RO)_3Si\text{-}R^2\text{-}S\text{-}SnR^6_3 \qquad (III),$$

in der bedeuten:
$R^6$: $C_1$-$C_6$-Alkyl, insbesondere n-Butyl
Aryl, insbesondere Phenyl,
enthalten, gelöst oder gegebenenfalls emulgiert in

c) einem protischen oder aprotischen Lösungsmittel oder Lösungsmittelgemisch.

2. Gemisch gemäß Anspruch 1, dadurch gekennzeichnet, daß sie Ankondensationsprodukte der unter a) und b) genannten Organosiliciumverbindungen enthalten.

3. Gemische gemäß den Ansprüchen 1 oder 2, dadurch gekennzeichnet, daß sie 5 bis 97 Gew.-% an Alkyltrialkoxysilan(en) und deren gegebenfalls vorhandenen Ankondensationsprodukten, 2 - 20 Gew.-% an Verbindungen gemäß den Formeln (II) und/oder (III) und deren gegebenenfalls vorhandenen Ankondensationsprodukten und 1 bis 93 Gew.-% Lösungsmittel enthalten.

4. Gemische gemäß einem oder mehreren der Ansprüche 1 bis 3, dadurch gekennzeichnet, daß sie zusätzlich 0,1 bis 5,0 eines an sich bekannten Kondensationskatalysators Gew.-% enthalten.

5. Gemische gemäß einem oder mehreren der Ansprüche 1 bis 4, dadurch gekennzeichnet, daß sie ein kationisches Trialkoxysilan der allgemeinen Formel

$$(C_2H_5O)_3Si\text{-}(CH_2)_3\text{-}\overset{\oplus}{N}(CH_3)_2C_nH_{2n+1}\ Cl^{\ominus} \qquad (IV)$$

oder

$$(C_2H_5O)_3Si\text{-}(CH_2)_3\text{-}\overset{\oplus}{N}(CH_3)(C_nH_{2n+1})_2\ Cl^{\ominus} \qquad (V)$$

mit n = 8 bis 18
enthalten

6. Verwendung von Gemischen gemäß einem oder mehreren der Ansprüche 1 bis 5 zur hydrophobierenden und antimikrobiellen Imprägnierung von anorganisch oxidischem Material

7. Verwendung von Gemischen gemäß einem oder mehreren der Ansprüche 1 bis 5, dadurch gekennzeichnet, daß man Sandstein, Mauerwerk, Beton oder Fassadenaußenputz imprägniert.

## Claims

1. Mixtures containing organosilicon compounds, characterised in that they contain

a) at least one alkyltrialkoxysilane of the general formula

$$(RO)_3Si\text{-}R^1 \qquad (I)$$

in which
R = $C_1$-$C_4$-alkyl, in particular $C_1$ or $C_2$-alkyl and
$R^1$ = $C_1$-$C_{18}$-alkyl, in particular $C_3$-$C_{18}$-alkyl,

b) a cationic trialkoxysilane corresponding to the general formula

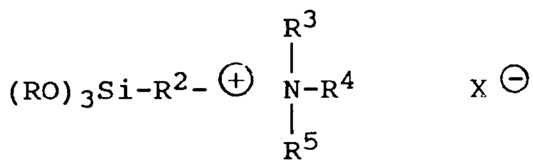 (II),

in which
$R^2 = C_1\text{-}C_3$-alkylene, or

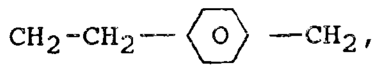

$R^3$, $R^4$ and $R^5 = C_1\text{-}C_{18}$-alkyl, which may be identical or different, and
$X^{(-)} = Cl^-, Br^-, NO_3^-, I^-$ or $CH_3COO^-$
and/or an organosilicon compound corresponding to the general formula
$(RO)_3Si\text{-}R^2\text{-}S\text{-}SnR^6_3$ (III)
in which
$R^6 = C_1\text{-}C_6$-alkyl, in particular n-butyl, or
aryl, in particular phenyl,
dissolved or optionally emulsified in
c) a protic or aprotic solvent or solvent mixture.

2. Mixtures according to Claim 1, characterised in that they contain condensation products of the organosilicon compounds mentioned under a) and b).

3. Mixtures according to Claim 1 or Claim 2, characterised in that they contain from 5 to 97% by weight of alkyl trialkoxysilane(s) and their condensation products optionally present, from 2-20% by weight of compounds corresponding to formulae (II) and/or (III) and their optionally present condensation products and 1 to 93% by weight of solvents.

4. Mixtures according to one or more of Claims 1 to 3, characterised in that they contain, in addition, from 0.1 to 5.0% by weight of a known condensation catalyst.

5. Mixtures according to one or more of Claims 1 to 4, characterised in that they contain a cationic trialkoxysilane corresponding to the general formula
$(C_2H_5O)_3Si\text{-}(CH_2)_3\text{-}N^{\oplus} (CH_3)_2C_nH_{2n+1} Cl^{\ominus}$ (IV)
or
$(C_2H_5O)_3Si\text{-}(CH_2)_3\text{-}N^{\oplus} (CH_3)(C_nH_{2n+1})_2 Cl^{\ominus}$ (V)
wherein n = 8 to 18.

6. The use of mixtures according to one or more of Claims 1 to 5 for hydrophobicizing and antimicrobial impregnation of inorganic oxidic material.

7. The use of mixtures according to one or more of Claims 1 to 5, characterised in that sandstone, brickwork, concrete or facing plaster is impregnated.

## Revendications

1. Mélanges contenant des composés organosiliciques, caractérisés en ce qu'ils contiennent :
a) au moins un alkyltrialkoxysilane de formule générale :
$(RO)_3Si\text{-}R^1$ (I)
dans laquelle :
R représente : un alkyle en $C_1\text{-}C_4$, surtout un alkyle en $C_1\text{-}C_2$,
$R^1$: représente : un alkyle en $C_2\text{-}C_{18}$, surtout un alkyle en $C_3\text{-} C_{18}$
b) un trialkoxysilane de formule générale :

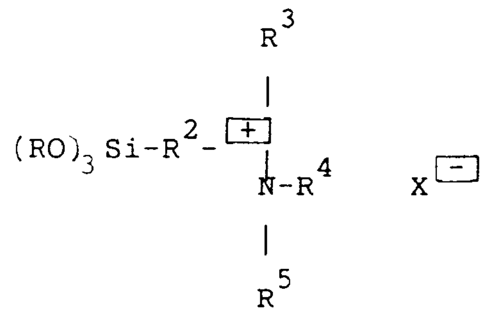

(II)

$R^2$: représente : un alkylène en $C_1$-$C_3$,

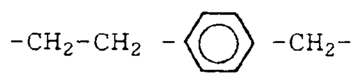

$R^3$, $R^4$, $R^5$: indiquent un alkyle en $C_1$ -$C_{18}$ - égal ou différent $X^{(-)}$ représente : $Cl^-$, $Br^-$, $NO_3^-$, $J^-$, $CH_3COO^-$

et/ou un composé organosilicique de formule générale :

$$(RO)_3Si\text{-}R^2\text{-}S\text{-}SnR_3^6 \qquad (III)$$

$R^6$: représente : un alkyle en $C_1$-$C_6$, surtout n-butyl, aryle, en particulier phényle.

et ils sont dissous ou éventuellement émulsionnés dans

c) un solvant protique ou aprotique ou un mélange de solvants.

2. Mélanges selon la revendication 1, caractérisés en ce qu'ils contiennent des produits de condensation des composés organosiliciques indiqués sous les paragraphes a) b).

3. Mélanges selon les revendications 1 ou 2, caractérisés en ce qu'ils contiennent 5 à 97 % en poids d'alkyltrialkoxysilane(s) et de ses produits de condensation éventuellement présents, 2 à 20 % en poids de composés selon les formules (II) et/ou (III) et de leurs produits de condensation éventuellement présents et 1 à 93 % en poids de solvant.

4. Mélanges selon une ou plusieurs des revendications 1 à 3, caractérisés en ce qu'ils contiennent en plus 0,1 à 5% en poids d'un catalyseur de condensation connu en soi.

5. Mélanges selon une ou plusieurs des revendications 1 à 4, caractérisés en ce qu'ils contiennent un trialkoxysilane cationique de formule générale:

$$(C_2H_5O)_3Si\text{-}(CH_2)_3\text{-}N^{\boxed{+}}(CH_3)_2C_nH_{2n+1}\ Cl^{\boxed{-}} \qquad (IV)$$

et

$$(C_2H_5O)_3Si\text{-}(CH_2)_3\text{-}N^{\boxed{+}}(CH_3)(C_nH_{2n+1})_2Cl^{\boxed{-}} \qquad (V)$$

avec n de 8 à 18.

6. Utilisation de mélanges selon une ou plusieurs des revendications 1 à 5, pour l'imprégnation imperméabilisante et antimicrobienne d'un matériau obtenu par oxydation minérale.

7. Utilisation de mélanges selon une ou plusieurs des revendications 1 à 5, caractérisée en ce qu'on imprègne du grés, de la maçonnerie, du béton ou crépi de façades.